# DEMANDE DE BREVET EUROPEEN

(11) **EP 0 889 272 A1**
(43) Date de publication de la demande: **07.01.1999**
(21) Numéro de dépôt: 98401696.4
(22) Date de dépôt: 06.07.1998
(51) Int. Cl.: F16L 33/08

(54) **Collier de serrage à vis**

(30) Priorité: 04.07.1997 FR 9708482
(71) Demandeur: Serflex, 94500 Champigny-sur-Marne (FR)
(72) Inventeur: Le Noan, Jacques, 78700 Conflans-ste-Honorine (FR)
(74) Mandataire: Intes, Didier Gérard André

(57) **Abrégé**

Collier de serrage comprenant une bande (10) enroulée sur elle-même, une vis de serrage (14) et un support (16) pour cette vis. Cette dernière comporte un fût fileté (18) disposé dans le support (16) et une tête (20) disposée hors du support, cette tête présentant une face d'appui (21) qui est tournée vers le fût fileté et qui est apte, lors du serrage de la vis, à coopérer avec une paroi d'appui (17) située à une extrémité (16B) du support. L'un des deux éléments constitués par la face d'appui (21) de la tête de la vis et par la paroi d'extrémité (17) du support présente au moins une surépaisseur (24). De préférence, cette surépaisseur équipe la face d'appui (21) de la tête de la vis.

## Description

La présente invention conceme un collier de serrage comprenant une bande enroulée sur elle-même, une vis de serrage et un support pour cette vis solidaire d'une première extrémité de la bande, la vis comportant un fût fileté disposé dans le support et une tête disposée hors du support, cette tête présentant une face d'appui qui est toumée vers le fût fileté et qui est apte, lors du serrage de la vis, à coopérer avec une paroi d'appui située à une extrémité du support, des surfaces de prise destinées à coopérer avec le fût fileté de la vis étant disposées au moins au voisinage d'une deuxième extrémité de la bande.

Pour serrer les colliers de ce type, on les dispose autour de l'objet à serrer, on insère la deuxième extrémité de la bande dans le boîtier sous la vis et on actionne la vis dans le sens du vissage de manière à engrener les filets du fût fileté avec les surfaces de prise, par exemple formées par les reliefs d'une crémaillère ou par des fenêtres ménagées dans la bande, afin de diminuer le diamètre du collier. L'objet à serrer peut souvent être constitué par un tuyau souple que l'on maintient à l'aide du collier sur un tube rigide. L'étanchéité de la liaison entre le tuyau souple et le tube rigide est souvent requise. Pour obtenir cette étanchéité ou, de manière générale, pour obtenir des conditions de serrage optimum, la vis doit être suffisamment serrée mais pas trop.

En fait, les constructeurs de ce type de collier leur affectent un "couple d'utilisation" qui correspond au couple de serrage minimal requis pour que le collier puisse remplir sa fonction. Bien entendu, cette fonction est également remplie lorsque le couple de serrage est légèrement supérieur à ce couple d'utilisation. En revanche, pour chaque collier de ce type, il existe un "couple de destruction" qui correspond à une valeur de couple de serrage excessive, pour laquelle le collier, trop serré, devient défaillant pour assurer sa fonction. Si le couple de destruction est atteint, le collier est irrémédiablement endommagé et la fonction requise, par exemple l'étanchéité, ne peut plus être obtenue.

Les colliers de serrage du type précité présentent en général des couples de destruction relativement bas, de l'ordre de 3,5 à 4 newtons-mètres. Par conséquent, de nombreux utilisateurs potentiels ont la force musculaire suffisante pour atteindre ce couple de destruction à l'aide d'un simple outil d'entraînement en rotation tel qu'une clé ou un tournevis.

Pour éviter l'obtention par inadvertance de ce couple de serrage, on a déjà proposé de doter la vis de deux têtes raccordées par un mince col sécable qui se casse lorsque le couple d'utilisation est atteint. Cette solution donne satisfaction mais elle présente un double inconvénient. En effet, d'une part, elle nécessite un usinage relativement compliqué de la vis et une quantité de métal supérieure à celle que nécessiterait une vis à une seule tête, ce qui augmente les coûts de production. D'autre part, après la rupture du col sécable, la première tête de la vis constitue un déchet qu'il faut recueillir. On peut encore noter que, même lorsque les vis ont subi un traitement anticorrosion, par exemple une galvanisation, ce traitement est en général appliqué sur la périphérie de la vis et ne peut en aucun cas protéger le col sécable après sa rupture, ce dernier constitue donc une zone de corrosion potentielle.

La présente invention vise à proposer une autre solution permettant d'éviter que le couple de destruction ne soit atteint par inadvertance.

Ce but est atteint grâce au fait que l'un des deux éléments constitués par la face d'appui de la tête de la vis et par la paroi d'extrémité du support présente au moins une surépaisseur.

La présence de cette ou de ces surépaisseur(s) permet de créer un couple de freinage du fait de la coopération de la surépaisseur, soit avec la face d'appui de la vis, si la surépaisseur est prévue sur le boîtier, soit avec la paroi d'appui du boîtier, si la surépaisseur est prévue sur la vis. Ce couple de freinage s'oppose au couple de rotation de la vis sans nuire à la tension de la bande et donc au serrage du collier. Ainsi, à mesure que la bande est tendue, et donc à mesure que le couple de serrage augmente, la surépaisseur appuie de plus en plus fortement sur la face d'appui de la vis ou sur la paroi d'appui du boîtier et le couple de freinage augmente. Lorsque l'utilisateur manoeuvre la vis en rotation, le couple qu'il applique sert au serrage mais, à partir d'une certaine tension de bande, il doit également vaincre le couple de freinage créé par la présence de la surépaisseur. Le couple de destruction du collier se trouve donc considérablement augmenté puisqu'il est en fait sensiblement égal à la somme du couple de destruction d'un collier "classique", dont ni la vis ni la paroi du boîtier ne présentent de surépaisseur, et du couple de freinage dû à la présence de cette surépaisseur. Selon la conformation de la surépaisseur, on obtient ainsi des couples de destruction de l'ordre de 6 newtons-mètres, valeur qu'un utilisateur de force moyenne ne peut atteindre en utilisant un outil manuel du type toumevis ou clé. Par ailleurs, la présence de la surépaisseur ne modifie pratiquement pas la valeur du couple d'utilisation, puisque le couple de freinage ne devient important que lorsque la surépaisseur commence à appuyer fortement sur la face d'appui ou sur la paroi d'appui.

Il faut noter que l'invention, par des dispositions extrêmement simples, permet d'éviter les inconvénients des vis à double tête sécable puisqu'elle n'occasionne aucun déchet et aucune rupture de la vis.

De préférence, la surépaisseur est réalisée sur la face d'appui de la tête de la vis. Selon deux variantes avantageuses, la surépaisseur peut être constituée par un bossage localisé ou par une collerette.

L'invention concerne également une vis de serrage comprenant un fût fileté et une tête qui présente une face d'appui, cette dernière étant tournée vers le fût et étant apte à coopérer avec une paroi d'appui lors du serrage de la vis.

Pour certaines applications, par exemple lorsqu'une vis de ce type équipe un collier de serrage du type précédemment évoqué, il est souhaitable d'éviter de trop dépasser un couple d'utilisation prédéterminé et, surtout, d'éviter d'atteindre un couple de destruction. Comme indiqué ci-dessus, on a déjà proposé dans cette optique des vis à double tête sécable, mais celles-ci présentent certains inconvénients évoqués plus haut. L'invention vise à proposer une autre solution pour éviter l'obtention d'un serrage excessif lorsque la vis est serrée contre la paroi d'appui.

Ce but est atteint grâce au fait que la face d'appui de la vis présente au moins une surépaisseur. Comme évoqué ci-dessus, cette surépaisseur permet, lors du serrage de la vis, de créer un couple de freinage qui, sans nuire au serrage, vient augmenter le couple de destruction.

L'invention sera bien comprise et ses avantages apparaîtront mieux à la lecture de la description détaillée qui suit, de modes de réalisation représentés à titre d'exemple non limitatif. La description se réfère aux dessins annexés sur lesquels :
- la figure 1 est une vue partielle schématique en élévation d'un collier de serrage,
- la figure 2 est une vue partielle de dessus du collier de la figure 1, montrant le collier équipé d'une vis selon un premier mode de réalisation de l'invention,
- la figure 3 est une vue en coupe de la vis selon la ligne III-III de la figure 2 et
- la figure 4 est une vue partielle d'une vis selon un autre mode de réalisation de l'invention.

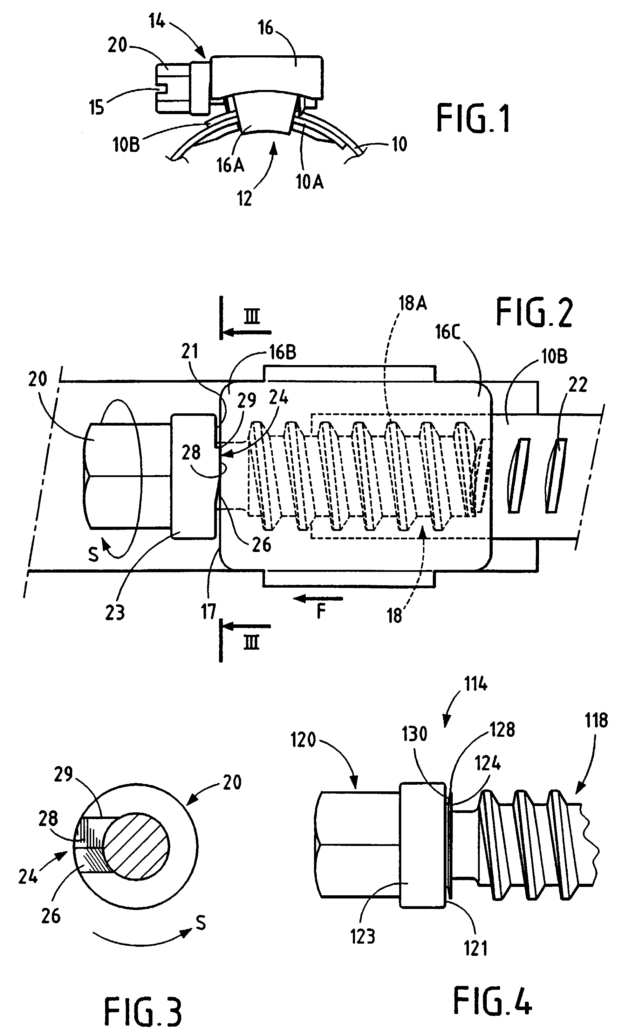

La figure 1 montre un collier de serrage comprenant une bande 10A enroulée sur elle-même. Cette bande est généralement en métal, par exemple de l'acier galvanisé ou non, mais peut également être en matière plastique. Un support 12 pour une vis 14 est fixé sur la première extrémité 10 de la bande. Ce support présente la forme d'un boîtier 16, dans lequel est engagée la vis et qui présente deux pattes latérales 16A repliées sous l'extrémité 10A de la bande et fixées avec cette dernière, par exemple à l'aide d'une semelle ou par engagement dans des fenêtres de forme complémentaire.

Comme on le voit sur la figure 2, la vis 14 comporte un fût fileté 18 disposé à l'intérieur du boîtier 16, et une tête 20 qui sort du boîtier à l'une de ses extrémités 16B. La deuxième extrémité 10B de la bande est engagée dans le boîtier et sous la vis 18, à partir de l'extrémité opposée 16C de ce boîtier. Au moins au voisinage de sa deuxième extrémité, la bande présente des surfaces de prise 22 avec lesquelles coopèrent les filets 18A de la vis pour faire avancer la deuxième extrémité de la bande par rapport au boîtier dans le sens de la flèche F et ainsi serrer le collier. Ces surfaces de prise peuvent être réalisées sur les reliefs d'une crémaillère ou à l'aide de fenêtres régulièrement espacées pratiquées dans la bande.

L'extrémité 16B du boîtier 16 du côté de laquelle est située la tête de la vis présente une paroi d'appui 17 sensiblement perpendiculaire à l'axe longitudinal de la vis. La tête 20 de cette vis présente, quant à elle, une face d'appui 21 qui est toumée vers le fût fileté 18, c'est-à-dire que lorsque la vis est mise en place sur le boîtier, cette face d'appui 21 se trouve en regard de la paroi d'appui du boîtier, et qui est également sensiblement perpendiculaire à l'axe de la vis. On comprend que lorsque l'on serre la vis, la tension de la bande s'équilibre, d'une part, par les forces qui s'exercent entre la bande et l'objet à serrer et, d'autre part, par les forces exercées entre la face d'appui 21 de la vis et la paroi d'appui 17 du boîtier.

Pour la plupart des colliers d'utilisation courante, la tension de bande nécessaire et suffisante à l'obtention de la fonction du collier, c'est-à-dire au bon maintien de l'objet à serrer ou à l'étanchéité, est obtenue lorsque le couple de serrage exercé sur la vis atteint une valeur de l'ordre de 3 à 3,5 newtons-mètres. Cette valeur est dénommée "couple d'utilisation". Sur les mêmes colliers, le couple de destruction, pour lequel le collier est détérioré et ne peut plus exercer la fonction souhaitée, est souvent de l'ordre de 3,5 à 4 newtons-mètres. Ainsi, avec des colliers classiques, ces valeurs sont très proches l'une de l'autre et il existe un risque important que le couple d'utilisation soit dépassé et que le couple de serrage atteigne le couple de destruction par un simple serrage manuel à l'aide d'un outil tel qu'un tournevis engagé dans la fente 15 de la tête de la vis ou une clé de forme complémentaire à celle de la tête de la vis.

Selon l'invention, comme on le voit sur la figure 1, la face d'appui 21 de la vis présente une protubérance 24 qui, lors du serrage de la vis, vient la première en contact avec la paroi d'appui 17 du boîtier.

Comme on le voit également sur la figure 3, cette protubérance peut être constituée par un simple bossage local, s'étendant par exemple sur un secteur angulaire de l'ordre d'une vingtaine de degrés. De préférence, ce bossage présente une première partie 26 d'épaisseur croissante, par exemple conformée en rampe, et une deuxième partie 28 formant un méplat. Lorsque l'on tourne la vis dans le sens S du serrage, c'est la rampe 26 qui se trouve en avant dans le sens du vissage. Il est en effet préférable d'éviter le blocage de la vis qui pourrait se produire si une arête vive telle que l'arête terminale 29 du méplat 28 se trouvait en avant dans le sens du vissage. La paroi d'appui 17 du boîtier étant plane, le méplat 26 du bossage 24 vient au contact de cette paroi sur toute sa surface.

Il faut noter que selon une variante non représentée, une surépaisseur pourrait plutôt être prévue sur la paroi d'appui 17 du boîtier que sur la face d'appui 21 de la tête de la vis. Cette surépaisseur pourrait également être constituée par un bossage ou par un simple usinage du même type. Toutefois, dans la mesure où le boîtier est en général réalisé à partir d'une feuille de métal d'épaisseur constante pliée sur elle-même, il est souvent plus facile de réaliser la surépaisseur sur la tête de la vis simplement lors du frappage de cette dernière.

La figure 4 montre une vis dont les éléments analogues à ceux de la vis des figures 2 et 3 sont affectés des mêmes références augmentées de 100. Ainsi, la face d'appui 121 de la tête 120 de la vis présente une surépaisseur constituée, cette fois, par une collerette 124 de forme annulaire. Cette collerette est préservée lors du frappage de la vis et s'étend en saillie vers le fût fileté 118 par rapport à la tête de la vis.

Lors du serrage de la vis de la figure 4 ou de celle des figures 2 et 3, la surépaisseur 24 ou 124 vient coopérer avec la paroi d'appui du boîtier. Cette surépaisseur représente une surface de contact (le méplat 28 ou l'extrémité 128 de la collerette) avec la paroi d'appui du boîtier suffisante pour ne pas occasionner de frottements importants jusqu'à ce que le couple de serrage atteigne le couple d'utilisation. Par conséquent, du fait de la présence de la surépaisseur, le couple d'utilisation n'est pas augmenté sensiblement. En revanche, à partir du moment où le couple d'utilisation est atteint, la surépaisseur 24 ou 124 commence à appuyer de plus en plus fortement sur la paroi d'appui 17 du boîtier à mesure que la vis est entraînée en rotation dans le sens du vissage. Du fait des dimensions des surfaces de contact 28 ou 128, celles-ci ont tendance à s'écraser contre la paroi d'appui du boîtier à mesure que le serrage augmente. De ce fait, le couple de freinage occasionné par la présence du bossage ou de la collerette augmente considérablement et le couple exercé par l'utilisateur devient de moins en moins efficace pour le serrage du collier mais vise bientôt pratiquement uniquement à combattre le couple de freinage ou de frottement. Il en résulte que le couple de destruction est considérablement augmenté et, en pratique, n'est pas atteint par un utilisateur de force moyenne.

Pour augmenter encore la propension des faces de contact 28 ou 128 à s'écraser contre la paroi d'appui du boîtier, la surépaisseur est susceptible de se déformer. Dans le cas du bossage 24, cette capacité à se déformer est due à la faible dimension du bossage par rapport à la surface de la face d'appui de la vis. Il est en effet localisé et peut même ne s'étendre que sur une partie marginale d'un secteur angulaire de la face d'appui de la vis. Dans le cas de la collerette, on constate sur la figure 4 que son extrémité 128 se trouve en surplomb, c'est-à-dire que cette extrémité est en fait formée sur un rebord s'étendant radialement, sur lequel est ménagé un espace 130. On comprend que lorsque, sous l'effet du serrage, la tête de la vis est de plus en plus sollicitée en appui contre la paroi d'appui du boîtier, ce rebord se déforme naturellement.

La vis représentée sur les figures 2 à 4 comporte une tête qui est à la fois pourvue d'une fente 15 pour un toumevis et qui présente un contour polygonal lui permettant de coopérer avec une clé de vissage. Pour caler cette clé axialement, la tête 20 de la vis présente une portion cylindrique 23 ou 123 qui est située du côté du fût fileté qui forme des saillies radiales par rapport aux méplats du polygone. Dans ce cas, la face d'appui 21 ou 121 de la vis est formée sur l'épaulement qui raccorde cette portion cylindrique au fût de la vis.

## Revendications

1. Collier de serrage comprenant une bande (10) enroulée sur elle-même, une vis de serrage (14, 114) et un support (12) pour cette vis solidaire d'une première extrémité (10A) de la bande, la vis comportant un fût fileté (18, 118) disposé dans le support et une tête (20, 120) disposée hors du support, cette tête présentant une face d'appui (21, 121) qui est tournée vers le fût fileté et qui est apte, lors du serrage de la vis, à coopérer avec une paroi d'appui (17) située à une extrémité (16B) du support, des surfaces de prise (22) destinées à coopérer avec le fût fileté (18) de la vis (14) étant disposées au moins au voisinage d'une deuxième extrémité (10B) de la bande,
caractérisé en ce que l'un des deux éléments constitués par la face d'appui (21, 121) de la tête (20, 120) de la vis et par la paroi d'extrémité (17) du support (12) présente au moins une surépaisseur (24, 124).

2. Collier selon la revendication 1, caractérisé en ce que la surépaisseur (24, 124) est prévue sur la face d'appui (21, 121) de la tête de la vis (14, 114).

3. Collier selon la revendication 1 ou 2, caractérisé en ce que la surépaisseur présente la forme d'un bossage local (24).

4. Collier selon la revendication 1 ou 2, caractérisé en ce que la surépaisseur présente la forme d'une collerette (124).

5. Vis de serrage comprenant un fût fileté (18, 118) et une tête (20, 120) qui présente une face d'appui (21, 121), cette dernière étant toumée vers le fût et étant apte à coopérer avec une paroi d'appui lors du serrage de la vis,
caractérisée en ce que la face d'appui (21, 121) de la vis présente au moins une surépaisseur (24, 124).

6. Vis de serrage selon la revendication 5, caractérisée en ce que la surépaisseur présente la forme d'un bossage local (24).

7. Vis selon la revendication 5, caractérisée en ce que la surépaisseur présente la forme d'une collerette (124).
